Europäisches Patentamt

European Patent Office

Office européen des brevets

(11) Veröffentlichungsnummer: **0 274 584 B1**

## EUROPÄISCHE PATENTSCHRIFT

(45) Veröffentlichungstag der Patentschrift: **20.03.91**

(21) Anmeldenummer: **87115589.1**

(22) Anmeldetag: **23.10.87**

(51) Int. Cl.⁵ **F16D 3/41**, F16C 33/78, F16J 15/32

(54) Vorrichtung zum Abdichten der Lagerbüchse eines Kreuzgelenkes.

(30) Priorität: **17.11.86 DE 3639315**

(43) Veröffentlichungstag der Anmeldung:
**20.07.88 Patentblatt 88/29**

(45) Bekanntmachung des Hinweises auf die
Patenterteilung:
**20.03.91 Patentblatt 91/12**

(84) Benannte Vertragsstaaten:
**AT ES FR GB IT NL SE**

(56) Entgegenhaltungen:
**DE-A- 1 805 018      DE-A- 1 908 265**
**DE-A- 3 118 430      DE-A- 3 419 111**
**DE-B- 2 047 420      DE-B- 2 556 769**
**DE-U- 8 616 597      FR-A- 2 450 976**
**GB-A- 2 094 418      US-A- 3 174 813**
**US-A- 3 858 413**

(73) Patentinhaber: **Gelenkwellenbau Gesellschaft
mit beschränkter Haftung
Westendhof 5-9
W-4300 Essen 1(DE)**

(72) Erfinder: **Schultze, Hans-Jürgen
Zwergstrasse 5
W-4300 Essen 11(DE)**
Erfinder: **Faulbecker, Gerd, Dipl.-Ing.
Wolfskuhle 25
W-4320 Hattingen 25(DE)**
Erfinder: **Gille, Wilfried
Wullbrey 28
W-4270 Dorsten 11(DE)**

(74) Vertreter: **Harwardt, Günther, Dipl.-Ing.
HARWARDT NEUMANN PATENTANWÄLTE
Scheerengasse 2 Postfach 1455
W-5200 Siegburg 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Vorrichtung zum Abdichten des Ringspaltes zwischen einer einseitig geschlossenen Lagerbüchse eines Kreuzgelenkes und dem zugehörigen Zapfen eines Zapfenkreuzes und zum axialen Abstützen deren zylindrischer Lagerkörper, wobei die Dichtung und eine Anlaufscheibe für die Lagerkörper zwischen der Lagerbüchseninnenwandung und der Zapfenaußenfläche angeordnet sind und ein Stützkörper vorgesehen ist, der gleichzeitig als Träger für eine Dichtung zum Zapfen hin einerseits und zur Lagerbüchseninnenwandung hin andererseits ausgebildet ist.

Eine derartige Ausbildung ist beispielsweise aus der DE-C-31 18 430 als bekannt zu entnehmen. Dabei ist die die Anlaufscheibe tragende Dichtung mit der Lagerbüchse verbunden. Die Verbindung erfolgt über federnde Umfangsteile und Eingriff in eine Nut in der Innenwandung des Lagerkörpers.

Die Abdichtung erfolgt gegenüber dem Zapfenkreuz über Dichtlippen. Unter dem Schmiermitteldruck öffnen die Dichtlippen und die Dichtung ist also hier für ein nachschmierbares Keuzgelenk gedacht. Von Nachteil bei dieser Ausbildung ist, daß bei höheren Axialkräften, die von den Lagerkörpern auf die Anlaufscheibe und die mit ihr verbundene Dichtung ausgeübt werden, ein Herausdrücken der Dichtung die Folge sein kann.

Hieraus wiederum folgt, daß die Lagerkörper an die eckig verlaufende Übergangsfläche des Zapfenkreuzes anlaufen können und dies zu einem Verklemmen und zu einer Zerstörung der Lagerung führt.

Von Nachteil ist ferner, daß durch die feste Anordnung der Dichtung mit Anlaufscheibe in der Lagerbüchse für eine genaue Positionierung eine Bohrungsstufe vorgesehen sein muß. Diese Bohrungsstufe führt zu einer Schwächung der Lagerbüchse und die Stützkräfte, die für eine gute axiale Halterung in der Lagerbüchse eine entsprechende Stärke derselben erfordern, können nicht in ausreichendem Maße aufgenommen werden. Desweiteren ist von Nachteil, daß bei der Montage die Dichtlippen mit ihren freien Enden der Aufschieberichtung entgegengerichtet sind.

Desweiteren ist aus der DE-B- 25 56 769 eine Dichtung bekannt, die fest auf dem Zapfen angeordnet ist. Die Lagerkörper sind unmittelbar gegen die Dichtung abgestützt. Von Nachteil bei dieser Ausführungsform ist, daß die Dichtung selbst nur geringe Axialkräfte aus den Lagerkörpern aufnehmen kann.

Ferner ist auch die separate Anordnung einer gegenüber der Büchse durch einen Sicherungsring axial gehaltenen Anlaufscheibe bekannt (DE-U-86 16 597). Die gewählte Anordnung kann jedoch eine axiale Verschiebung der Lagerkörper und Beaufschlagung der Dichtung nicht vermeiden. Darüber hinaus beeinflußt die Anordnung die axiale Baulänge bzw. begrenzt die Baulänge für die Lagerkörper selbst.

Es wurde festgestellt, daß infolge des fertigungsbedingten Spieles unter Drehmoment, die Lagerkörper eine gwissse Schrägstellung erfahren, die unvermeidbar ist.

Aufgrund dieser Schrägstellung werden Axialkräfte erzeugt, die die Lagerkörper in Richtung des offenen Ende der Lagerbüchse bewegen. Die axial wirksamen Kräfte belasten die Dichtung und können ein Herausdrücken derselben aus einem Sitz oder aber auch zu einer Undichtigkeit führen. Beides bewirkt auf jeden Fall eine Verringerung der Lebensdauer bzw. einen vorzeitigen Ausfall.

Es ist aus der DE-A- 34 19 111 ferner bekannt, der Dichtung einen Winkelring zuzuordnen, der von einem Haltering gegenüber eine Nut der Lagerbüchse abgestützt wird. Von Nachteil bei dieser Ausbildung ist, daß der Winkelring eine präzise Fertigung erfordert, um einen Festsitz zu erreichen. Wird das zur Erzielung des Festsitzes zu wählende Übermaß zu groß gewählt, wird die relativ dünnwandige Lagerbüchse zusätzlich beansprucht. Wird das Übermaß zu gering gewählt, besteht die Gefahr, daß sich die Dichtung im Verhältnis zur Lagerbüchse drehen kann. so daß keine eindeutigen Dichtverhältnisse gegeben sind. Darüberhinaus wird auf keinen Fall eine Abdichtung zwischen der Außenfläche des Winkelringes und der Innenwandung der Lagerbüchse erreicht. Es besteht also die Gefahr des Entweichens bzw. Eindringens von Schmiermittel in diesen Bereich, was die Haltefunktion noch weiter nachteilig beeinflußt.

Schließlich zeigt die DE-A 20 47 420 einen Winkelring, der in die Dichtung eingebettet ist. Die axiale Abstützung erfolgt elastisch über das Dichtungsmaterial selbst, sodaß ebenfalls die Gefahr des Schrägstellens der Lagerkörper nicht vermieden wird.

Ausgehend hiervor liegt der vorliegenden Erfindung die Aufgabe zugrunde, eine Vorrichtung zum Abdichten und axialen Abstützen der zylindrischen Lagerkörper zu schaffen, die auch größeren Axialkräften, die von den Lagerkörpern ausgeübt werden, widerstehen, ohne daß ein negativer Einfluß auf die Abdichtung und auf die Lagerung ausgeübt wird.

Diese Aufgabe wird erfindungsgemäß dadurch gelöst, daß der Stützkörper einen etwa konzentrisch zur Zapfenaußenfläche verlaufenden zylindrischen Teil und von dessen Ende axial sich erstreckende Vorsprünge, die umfangsverteilt angeordnet sind, aufweist, wobei die Anlaufscheibe gegen die als Anschlag ausgebildeten Endflächen der Vorsprünge abgestützt ist und der Stützkörper einen

2

separaten Dichtungskörper trägt und mit seinen Vorsprüngen durchdringt, welcher einen zwischen dem Stützkörper und der Zapfenaußenfläche und einen zwischen dem Stützkörper und der Innenwandung der Lagerbüchse angeordneten Dichtungsteil aufweist.

Von Vorteil bei dieser Ausbildung, das Stützfunktion und Dichtfunktion getrennt sind. Es wird hierdurch eine unmittelbare Einleitung der Stützkräfte, die aus den Wälzkörpern resultieren, und damit eine genaue Führung der Wälzkörper erreicht. Durch die Aufteilung der Dichtung in zwei Bereiche wird außerdem erreicht, daß gegenüber dem Lagerteil, nämlich entweder der Büchse oder dem Zapfen, zu dem die Dichtung mit dem Stützkörper undrehbar gehalten werden soll, durch ihre Ausbildung die Haltefunktion übernehmen kann bzw. diese unterstützen kann.

Die Dichtung ist hierbei von jeglicher Stützfunktion entlastet und die Bewegung der Lagerkörper bzw. die aus ihrer Bewegung resultierenden Axialkräfte haben keinen Einfluß auf die Dichtung selbst. Ein Vorteil bei dieser Ausbildung ist ferner, daß durch die Trennung der Dichtung in zwei Bereiche eine verhältnismäßig große Vorspannung zu dem Teil, zu dem die Dichtung keine Relativbewegung ausführen soll, z.B. dem Zapfen, gewählt werden kann, wodurch die drehfeste Verbindung zwischen Stützkörper und Zapfen noch unterstützt wird. Demgegenüber kann der zur Abdichtung gegenüber der Innenwandung der Lagerkörper vorgesehene Teil entsprechend weich ausgebildet werden, um eine gute Dichtfunktion zu erzielen.

Nach einer bevorzugten Ausführungsform ist vorgesehen, daß der Stützkörper auf dem Zapfen drehfest angeordnet ist und in Achsrichtung des Zapfens an einer insbesondere mit einem Radius verlaufenden Stützfläche abgestützt ist. Durch die Zuordnung des Stützkörpers zum Zapfen des Zapfenkreuzes, d.h. durch dessen drehfeste Verbindung mit demselben, ist gewährleistet, daß eine ausreichende axiale Unterstützung erreicht wird. Durch die Zuordnung zum Zapfenkreuz besteht auch nicht die Gefahr, daß eventuell Dichtungteile aus dem Sitz herausgeschoben werden können.

Darüber hinaus wird durch die drehfeste Anordnung gegenüber dem Zapfen auch noch erreicht, daß die Lagerbüchse keine Bohrungsstufe aufzuweisen braucht. Sie wird also nicht geschwächt. Ferner ist durch die feste Zuordnung zum Zapfen auch ein Übergang mit großen Radien möglich und die erforderliche Bearbeitung in den Übergangsbereichen erfordert keine Oberflächengenauigkeit, wie sie erforderlich wäre, wenn die Lippen der Dichtungen eine Relativbewegung zu den Zapfen ausführen würden. Die großen Radien sorgen außerdem für eine gute Axiallastverteilung und führen zu einer Erhöhung der Tragfestigkeit.

In weiterer Ausgestaltung ist vorgesehen, daß der Stützkörper eine Dichtlippe aufweist, die im Bereich der Stirnfläche der offenen Seite der Lagerbüchse an dieser anliegt. Es handelt sich um eine sogenannten Vordichtung, die das Eindringen von Schmutz in den eigentlichen Dichtungsbereich verhindert. Sie ist durch ihre Anlage an der Stirnfläche so ausgebildet, daß ein Durchschmieren möglich ist.

In weiterer Ausgestaltung der Erfindung ist vorgesehen, daß der Dichtungskörper mit einer den Vorsprüngen entsprechenden Anzahl von und deren Ausbildung angepaßten Durchbrüchen und mit einer ringförmigen Vertiefung zur zumindest teilweisen Aufnahme des zylindrischen Teils des Stützkörpers versehen ist.

Für den Fall der ortsfesten Zuordnung der Dichtung zur Lagerbüchse ist vorgesehen, daß der Stützkörper mit einem Vorsprung in einer Nut in der Lagerbüchseninnenwandung gehalten ist.

Es ist auch möglich, den Stützkörper an einem separaten Stützring abzustützen, der in einer Nut in der Lagerbüchseninnenwandung gehalten ist.

Die Befestigung des Stützkörpers kann auch durch eine partielle Verformung seines zylindrischen Mantels derart erfolgen, daß die verformten Bereiche in die Nut eingreifen.

Bevorzugt ist der Stützkörper aus Polyamid oder aus einem ähnlichen Kunststoff hergestellt. Dieser Kunststoff zeichnet sich durch eine hohe Festigkeit aus.

Bevorzugt ist zur Erzielung einer Vormontage vorgesehen, daß der Stützkörper im Bereich der Stirnfläche der Öffnung der Lagerbüchse mit einer oder mehreren umfangsverteilt angeordneten Montagestützflächen versehen ist, wobei die zur Dichtung gegenüber der Innenfläche der Lagerbüchse oder der Zapfenaußenfläche vorgesehenen Dichtlippen schräg zur Achse des zugehörigen Zapfens verlaufen und mit ihrem freien Ende in Richtung der Öffnung der Lagerbüchse weisen.

Durch diese Ausbildung wird erreicht, daß aus der Lagerbüchse zusammen mit den Lagerkörpern, der Anlaufscheibe und dem Stützkörper mit Dichtungskörper eine vormontierte Baueinheit hergestellt werden kann. Diese vormontierte Baueinheit wird dann auf den Zapfen des Zapfenkreuzes aufgeschoben. Darüber hinaus wird bei dem Aufschieben der vormontierten Baueinheit auf den Zapfen jegliche Relativbewegung in Achsrichtung der Büchse zwischen den Dichtlippen und der Innenwandung der Lagerbüchse vermieden. Die axial auftretenden Montagekräfte werden durch die zusätzlichen Montagestützflächen an dem Stützkörper aufgefangen. Es erfolgt eine direkte Einleitung dieser Axialkräfte über die Montageabstützflächen und die Stirnfläche der Lagerbüchse in die Büchsenwandung. Die Dichtung selbst bleibt frei von jeglicher Beeinflussung aus den Aufschiebekräften.

Bevorzugte Ausführungsbeispiele nach der Erfindung sind in der Zeichnung dargestellt:

Es zeigt:

Fig. 1      die schematische Darstellung einer Gelenkwelle,

Fig. 2      eine Zapfenkreuzgarnitur,

Fig. 3 + 4      verschiedene Ausführungsformen als Detail A gemäß Fig. 2 in vergrößertem Maßstab,

Fig. 5      eine perspektivische Teilansicht des Stützkörpers gemäß Fig. 4 und

Fig. 6      eine perspektivische Teilansicht des Dichtungskörpers gemäß Fig. 4.

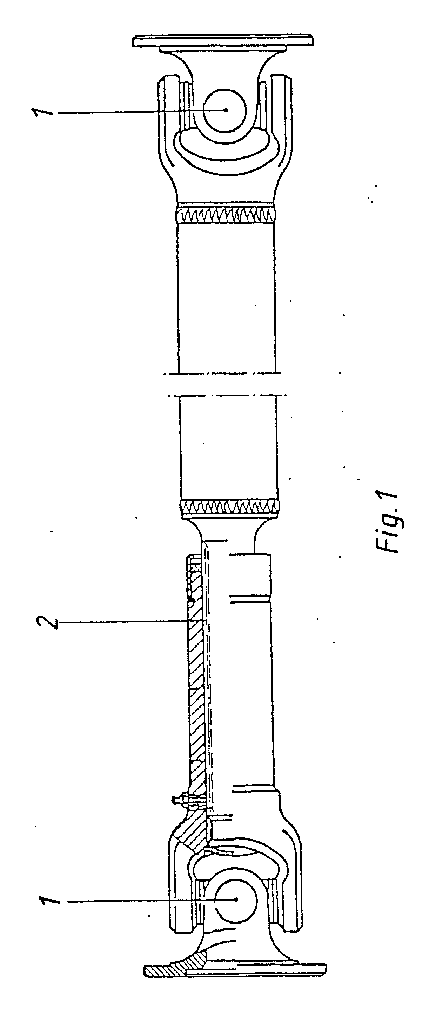

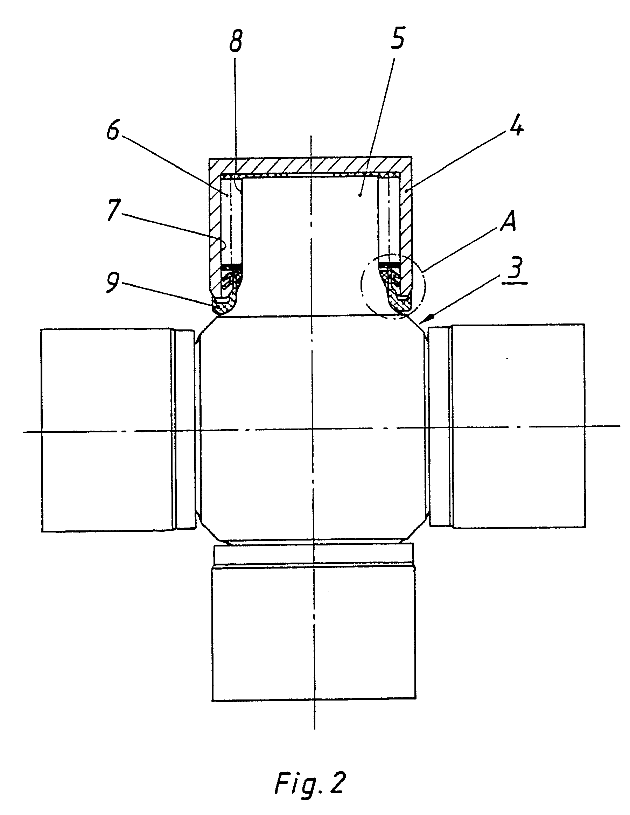

Die in Figur 1 dargestellte Gelenkwelle besteht aus den beiden Kreuzgelenken 1, die jeweils eine mit einem Flansch und eine mit der Verschiebung 2 verbundene Gelenkgabel aufweisen. Die Verschiebung 2 besteht aus einer Profilhülse, die mit einem der Gelenke 1 und einem Zapfen, der mit dem anderen der Gelenke 1 verbunden ist.Die beiden Gelenkgabeln eines Gelenkes sind durch eine Zapfenkreuzgarnitur, so wie sie in Figur 2 dargestellt ist, miteinander gelenkig verbunden. Die Zapfenkreuzgarnitur besteht aus dem Zapfenkreuz 3, das vier im rechten Winkel zueinander stehende Zapfen 5 aufweist. Die Zapfen 5 haben eine zylindrische Zapfenaußenfläche 8. Auf der Zapfenaußenfläche 8 sind zylindrische Lagerkörper 6 abrollend bewegbar angeordnet. Die Lagerkörper 6 sind von einer Lagerbüchse 4 umschlossen. Die Lagerkörper 6, die über dem Umfang verteilt sind, laufen also einerseits auf der Lagerbüchseninnenwandung 7 und zum anderen auf der Zapfenaußenfläche 8.

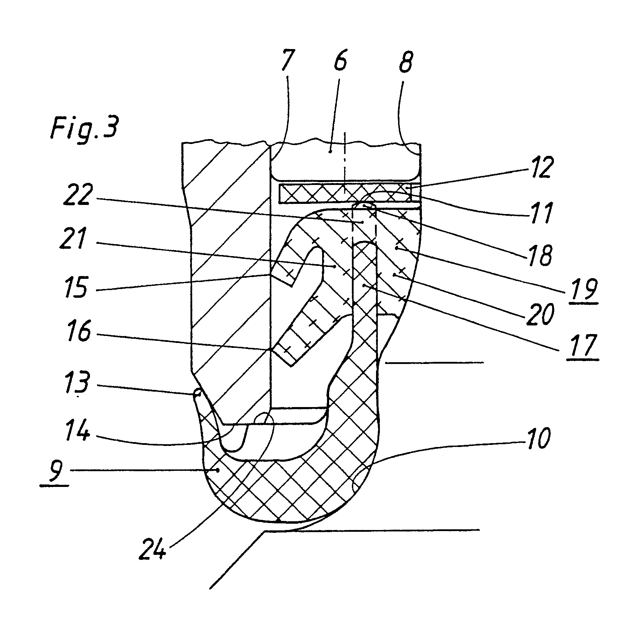

Die Lagerbüchse 4 weist einen Boden auf, mit dem sie gegebenenfalls unter Zwischenschaltung einer Lagerscheibe an der Endfläche des Zapfens 5 abgestützt ist. Das offene Ende der Lagerbüchse 4 ist durch eine Dichtung 19 abgeschlossen. Die Dichtung 19 ist in den Figuren 3 bis 6 näher dargestellt und wird anhand derselben näher erläutert. Diese Zeichnungsfiguren zeigen zur Vereinfachung nur einen Teilausschnitt, nämlich das Detail A der sich ansonsten über den Umfang der Zapfenaußenfläche 8 und der Lagerbüchseninnenwandung 7 erstreckenden Dichtung.

Die Dichtungsanordnung gemäß Figur 3 weist einen Stützkörper 9 auf, der aus einem zylindrischen Teil 17 besteht, von dem in Art einer Krone über den Umfang verteilte Vorsprünge 18 abstehen. Die Endflächen dieser Vorsprünge 18 sind als Anschläge 11 ausgebildet. Gegen die Anschlagflächen 11 liegt die Anlaufscheibe 12 an. An der Gegenfläche der Anlaufscheibe 12 stützen sich die Lagerkörper 6 in Axialrichtung ab.

Der zylindrische Teil 17 des Stützkörpers 9 geht mit einem Radius in einen radial verlaufenden Teil über. Mit seinem Radiusteil ist der Stützkörper 9 an einer entsprechenden Radiusfläche, nämlich der Stützfläche 10 des Zapfenkreuzes 3 in Axialrichtung abgestützt gehalten. Der Radius kann relativ groß bemessen sein, wodurch sich ein günstiger Einfluß auf die Festigkeit des Zapfenkreuzes 3 selbst ergibt und auch eine gute Lastverteilung für die vom Stützkörper aufzubringenden Stützkräfte, die ein Verschränken beispielsweise der Lagerkörper 6 verhindern sollen, d.h. die die Lagerkörper 6 in ihrer Axialposition halten. Am Ende des radial verlaufenden Teiles weist der Stützkörper 9 eine einstückig angeformte Dichtlippe 13 auf, die sich gegen die Stirnfläche 14 der Lagerbüchse 4 anlegt.

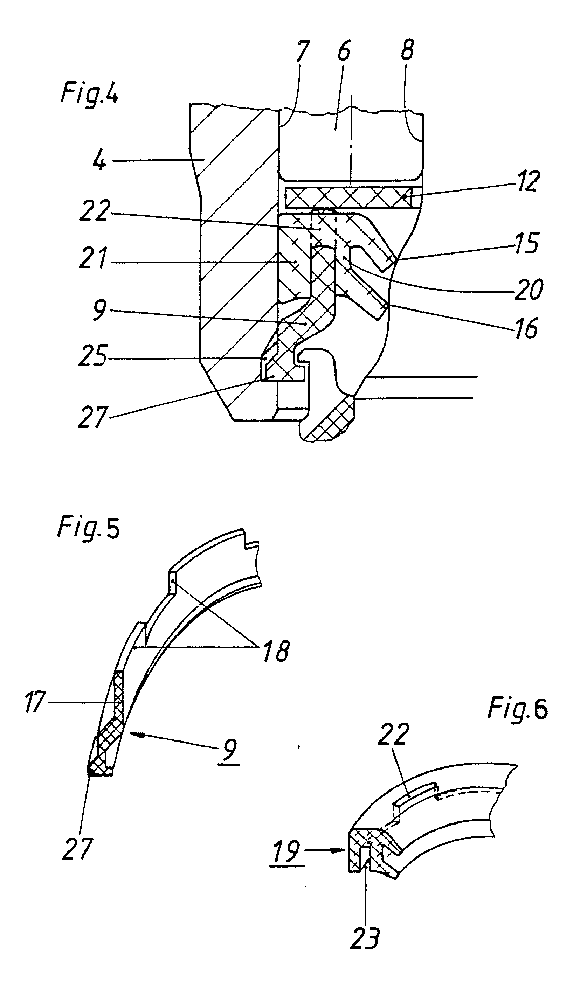

Diese Dichtlippe 13 dient als Vordichtung, d.h. sie dient vor allen Dingen dazu, ein Eindringen von Schmutz von außen zu verhindern. Auf der anderen Seite liegt sie derart an der Stirnfläche 14 an, daß sie bei Einpressen von Fett in die Lagerung sich von ihrer Anlage abhebt und ein Austreten des überschüssigen Schmiermittels ermöglicht. Der zylindrische Teil 17 des Stützkörpers 9 dient gleichzeitig zur Aufnahme des Dichtungskörpers 19. Hierzu weist der Dichtungskörper 19 eine entsprechende ringförmige Vertiefung 23 auf, die am besten aus der Darstellung gemäß Figur 6 ersichtlich ist. Ferner weist die Dichtung 19 über dem Umfang ihrer Stirnfläche verteilte und von dieser ausgehende und bis in die Vertiefung 23 hineinreichende Durchbrüche 22 auf. Diese Durchbrüche 22 sind entsprechend den Vorsprüngen 18 des Stützkörpers 9 auf dem Umfang des Dichtungskörpers 19 verteilt angeordnet. Die Vorsprünge 18 des Stützkörpers 9 durchdringen diese Durchbrüche 22.

Ferner sind die Vorsprünge 18 in ihrer Länge so ausgebildet, daß sie über die Endfläche des Dichtungskörpers 19 herausstehen, so daß keine Berührung zwischen der Anlaufscheibe 12 und der Dichtung 19 entstehen kann. Die erforderlichen Stützkräfte werden aus den Lagerkörpern 6 über die Anlaufscheibe 12 also direkt in den Stützkörper 9 eingeleitet. Durch die Vertiefung 23, in die der zylindrische Teil 17 hineinragt, wird der Dichtungskörper 19 in zwei Bereiche unterteilt, und zwar in einen Bereich, der für eine Abdichtung zwischen dem Stützkörper 9 und der Zapfenaußenfläche 8 sorgt, und der mit 20 bezeichnet ist, und einen Bereich, der für eine Abdichtung des Freiraumes zwischen der Lagerbüchseninnenwandung 7 und dem zylindrischen Teil 17 des Stützkörpers 9 sorgt. Im Falle der Ausbildung gemäß Figur 3, d.h. bei einer festen Zuordnung des Stützkörpers 9 zum Zapfenkreuz 3 bzw. zum Zapfen 5 ist der zum Zapfen hin gerichtete Dichtungsteil 20 als eine Volldichtung ausgebildet. Ihre Außenfläche ist der Zapfenaußenfläche 8 angepaßt.

Im vorliegenden Fall ist dies eine, von einer zylindrischen Fläche in eine Radiusfläche übergehende Fläche. Die Stärke des Dichtungsteil 20 in radialer Richtung ist so gemessen, daß ein fester Sitz auf dem Zapfen 5 gewährleistet ist. Es erfolgt also ein entsprechendes Zusammenpressen des Dichtungsteils 20. Dies hat jedoch keinen Einfluß auf den übrigen Dichtungsteil 21, da die entsprechenden Stützkräfte vom Stützkörper 9 aufgefangen werden.

Gegenüber der Lagerbüchseninnenwandung 7 ist das Dichtungsteil 21, welches zwei Dichtlippen 15 und 16 aufweist, wirksam. Die Dichtlippen 15 und 16 verlaufen gegenüber der Lagerbüchseninnenwandung bzw. der Achse des Zapfens 5 geneigt, und zwar weisen sie zum offenen Ende der Lagerbüchse 4 hin. Hierdurch ist gewährleistet, daß von außen kein Schmutz eindringen kann, daß auf der anderen Seite aber unter dem Schmiermitteldruck die Dichtlippen 15 und 16 von der Lagerbüchseninnenwandung abheben und das verbrauchte Schmiermittel passieren lassen. Die Durchbrüche 22 in Verbindung mit den Vorsprüngen 18 sorgen außerdem dafür, daß eine drehfeste Verbindung zwischen dem Stützkörper 9 und der Dichtung 19 erzielt wird.

Der Stützkörper 9 ist mit einer oder mehreren über den Umfang verteilten Montagestützflächen 24 versehen, die sich gegen die Stirnfläche 14 der Lagerbüchse 4 zumindest beim Montagevorgang abstützen.

Der Montagevorgang ist etwa wie folgt:

Zunächst werden die Lagerkörper 6 in die Lagerbüchse 4 unter Zuhilfenahme von Fett eingelegt und an ihrem Platz gehalten. In axialer Folge wird dann die Anlaufscheibe eingelegt und der den Dichtungskörper 19 tragende Stützkörper 9 in die Lagerbüchse eingeschoben.

Diese Baueinheit wird dann zusammen auf den Zapfen 5 des Zapfenkreuzes 3 aufgeschoben. Die nötige Aufschiebkraft, die auf den Büchsenboden ausgeübt wird, wird über den Stützkörper 9 aufgebracht, ohne daß schädliche Einflüsse auf die Dichtungen 15 und 16 gegeben sind.

Bei der Ausführungsform nach Figur 4 ist der Stützkörper 9 der Lagerbüchse 4 ortsfest zugeordnet. Er greift über eine Nase 27 in eine Nut 25 in der Lagerbüchseninnenwandung 7 ein. In diesem Falle ist das Dichtungsteil 21, das zwischen dem zylindrischen Teil 17 des Stützkörpers 9 und der Lagerbüchseninnenwandung 7 angeordnet ist, als Volldichtung ausgebildet, und entspricht von der Funktion her dem Dichtungsteil 20 gemäß Figur 3, d.h. es ist also eine Umkehrung gegeben, denn das Dichtungsteil 20 gemäß der Ausführungsform der Figur 4 weist Dichtlippen 15 und 16 auf, die gegenüber der Zapfenaußenfläche 8 abgestützt sind. Die Relativbewegung findet hier also zwischen den Dichtlippen 15 und 16 und damit im Dichtungsteil 20 gegenüber dem Zapfen 5 statt. Bei der Ausführungsform nach Figur 4 ist im übrigen der Vordichtungsteil, d.h. der radialverlaufende Teil des Stützkörpers 9 gemäß Figur 3 einem separaten Bauteil zugeordnet. Dieses separate Bauteil ist in Figur 4 nicht näher dargestellt.

Wie aus Figur 5 ersichtlich ist, sind die Vorsprünge 18 am Stützkörper 9 kronenartig angebracht. Die Vorsprünge 18 korrespondieren zu den Durchbrüchen 22 der Dichtung 19, so wie sie in Figur 6 dargestellt sind. Außerdem greift der Stützkörper 9 mit seinem zylindrischen Teil 17 in die Vertiefung 23 des Dichtungskörpers 19 ein.

## Ansprüche

1. Vorrichtung zum Abdichten des Ringspaltes zwischen einer einseitig geschlossenen Lagerbüchse eines Kreuzgelenkes und dem zugehörigen Zapfen eines Zapfenkreuzes und zum axialen Abstützen deren zylindrischer Lagerkörper, wobei die Dichtung und eine Anlaufscheibe für die Lagerkörper zwischen der Lagerbüchseninnenwandung und der Zapfenaußenfläche angeordnet sind, und ein Stützkörper vorgesehen ist, der gleichzeitig als Träger für eine Abdichtung zum Zapfen hin einerseits und zur Lagerbüchseninnenwandung hin andererseits ausgebildet ist,
   dadurch gekennzeichnet,
   daß der Stützkörper(9) einen etwa konzentrisch zur Zapfenaußenfläche (8) verlaufenden zylindrischen Teil (17) und von dessen Ende axial sich erstreckende Vorsprünge (18), die umfangsverteilt angeordnet sind, aufweist, wobei die Anlaufscheibe (12) gegen die als Anschlag ausgebildeten Endflächen (11) der Vorsprünge (18) abgestützt ist und der Stützkörper (9) einen separaten Dichtungskörper (19) trägt und mit seinen Vorsprüngen (18) durchdringt, welcher einen Dichtungsteil (20) zwischen dem Stützkörper (9) und der Zapfenaußenfläche (8) und einen zwischen dem Stützkörper (9) und der Innenwandung (7) der Lagerbüchse (4) angeordneten Dichtungsteil (21) aufweist.

2. Vorrichtung nach Anspruch 1,
   dadurch gekennzeichnet,
   daß der Stützkörper (9) auf dem Zapfen angeordnet und in Achsrichtung des Zapfens (5) an einer insbesondere mit einem Radius (R) verlaufenden Stützfläche (10) abgestützt ist.

3. Vorrichtung nach Anspruch 1,
   dadurch gekennzeichnet,
   daß der Stützkörper (9) eine Dichtlippe (13) aufweist, die im Bereich der Stirnfläche (14) der offenen Seite der Lagerbüchse (4) an dieser anliegt.

4. Vorrichtung nach Anspruch 1,
dadurch gekennzeichnet,
daß der Dichtungskörper (19) mit einer den Vorsprüngen (18) entsprechenden Anzahl von und deren Ausbildung angepaßten Durchbrüchen (22) und mit einer ringförmigen Vertiefung (23) zur zumindest teilweisen Aufnahme des zylindrischen Teils (17) des Stützkörpers (9) versehen ist.

5. Vorrichtung nach Anspruch 1,
dadurch gekennzeichnet,
daß der Stützkörper (9) mit einem Vorsprung (18) in einer Nut (25) in der Lagerbüchseninnenwandung (7) gehalten ist.

6. Vorrichtung nach Anspruch 1,
dadurch gekennzeichnet,
daß der Stützkörper (9) an einem separaten Stützring abgestützt ist, der in einer Nut in der Lagerbüchseninnenwandung (7) gehalten ist.

7. Vorrichtung nach Anspruch 6,
dadurch gekennzeichnet,
daß der Stützkörper (9) durch zumindest partielle Verformung in die Nut (25) eingreift.

8. Vorrichtung nach Anspruch 1,
dadurch gekennzeichnet,
daß der Stützkörper (9) aus Polyamid besteht.

9. Vorrichtung nach Anspruch 1,
dadurch gekennzeichnet,
daß der Stützkörper (9) im Bereich der Stirnfläche (14) der Öffnung der Lagerbüchse (4) mit einer oder mehreren umfangsverteilten Montagestützflächen (24) versehen ist, und daß die zur Dichtung gegenüber der Innenfläche (7) der Lagerbüchse (4) oder der Zapfenaußenfläche (8) vorgesehene Dichtlippe (15,16) schräg zur Achse (x-x) des zugehörigen Zapfens (5) verläuft und mit ihrem freien Ende in Richtung der Öffnung der Lagerbüchse (4) weist.

## Claims

1. A device for sealing the annular gap between a unilaterally closed bearing cup of a universal joint and the associated arm of a cross member and for axially supporting their cylindrical bearing members, with the seal and a stop disc for the bearing members being arranged between the inner bearing cup wall and the outer face of the arm and with there being provided a supporting member designed to act simultaneously as a carrier for sealing means towards the arm on the one hand and towards the inner bearing cup wall on the other hand, characterised in that the supporting member (9) comprises a cylindrical part (17), extending substantially concentrically relative to the outer arm face (8), and circumferentially distributed projections (18) axially extending from the end thereof, the stop disc (12) being supported relative to end faces (11) of the projections (18) formed as stops, and the supporting member (9) carrying a separate sealing member (19) and penetrating it with its projections (18), which sealing member comprises a sealing part (20) between the supporting member (9) and the outer arm face (8) and a sealing part (21) arranged between the supporting member (9) and the inner wall (7) of the bearing cup (4).

2. A device according to Claim 1,
characterised in
that the supporting member (9) is arranged on the arm and supported in the axial direction of the arm (5) on a supporting face (10) which extends especially with a radius (R).

3. A device according to Claim 1,
characterised in
that the supporting member (9) comprises a sealing lip (13) which, in the region of the end face (14) of the open end of the bearing cup (4), rests thereagainst.

4. A device according to Claim 1,
characterised in
that the sealing member (19) is provided with apertures (22) adapted in number and design to the projections (18) and with an annular indentation (23) for at least partially receiving the cylindrical part (17) of the supporting member (9).

5. A device according to Claim 1,
characterised in
that the supporting member (9) is held with a projection (18) in a groove (25) in the inner bearing cup wall (7).

6. A device according to Claim 1,
characterised in
that the supporting member (9) is supported on a separate supporting ring which is held in a groove in the inner bearing cup wall (7).

7. A device according to Claim 6, characterized in that the supporting member (9) engages the groove (25) as a result of at least partial deformation.

8. A device according to Claim 1, characterized in that the supporting member (9) consists of polyamide.

9. A device according to Claim 1, characterized in that the supporting member (9), in the region of the end face (14) of the opening of the bearing cup (4), is provided with one or more circumferentially distributed assembly support faces (24) and that the sealing lip (15, 16) constituting sealing means relative to the inner face (7) of the bearing cup (4) or the outer arm face (8) extends at an angle relative to the axis (x-x) of the respective arm (5), with its free end pointing in the direction of the opening of the bearing bush (4).

## Revendications

1. Dispositif pour étancher l'interstice annulaire entre une douille de palier d'un joint d'aticulation à croisillon, cette douille étant fermée d'un côté, et le tourillon conjugué appartenant à un croisillon, et pour soutenir axialement leurs corps roulants cylindriques, l'organe d'étanchéité et une rondelle d'appui, pour l'appui des corps roulants, étant agencés entre la paroi interne de la douille de palier et la surface externe du tourillon, et un corps d'appui étant prévu, lequel est en même temps réalisé en tant que support pour un moyen d'étanchéité se rapportant au tourillon, d'une part, et à la paroi interne de la douille de palier, d'autre part, caractérisé par le fait que le corps d'appui (9) présente une partie cylindrique (17) sensiblement concentrique à la surface externe (8) du tourillon et des saillants (18) qui s'étendent axialement depuis l'extrémité de cette partie et sont répartis périmétriquement, la rondelle d'appui (12) prenant appui contre les surfaces externes (11) des saillants (18) réalisées en tant que butée, et le corps d'appui (9) portant un organe d'étanchéité séparé (19) qu'il traverse par ses saillants (18), cet organe d'étanchéité (19) présentant une partie étanchéité (20) entre le corps d'appui (9) et la surface externe (8) du tourillon, et une partie étanchéité (21) agencée entre le corps d'appui (9) et la paroi interne (7) de la douille de palier (4).

2. Dispositif selon revendication 1, caractérisé par le fait que le corps d'appui (9) est agencé sur le tourillon et prend appui en direction axiale du tourillon (5), contre une surface d'appui (10) dont le tracé suit notamment un rayon (R).

3. Dispositif selon revendication 1, caractérisé par le fait que le corps d'appui (9) présente une lèvre d'étanchéité (13) qui, dans la région de la surface frontale (14) du côté ouvert de la douille de palier (4), s'appuie contre celle-ci.

4. Dispositif selon revendication 1, caractérisé par le fait que le corps d'étanchéité (19) est muni d'ajours (22) dont le nombre correspond aux saillants (18) et dont la configuration leur est adaptée, et d'une dépression annulaire (23) pour recevoir au moins partiellement la partie cylindrique (17) du corps d'appui (9).

5. Dispositif selon revendication 1, caractérisé par le fait que le corps d'appui (9) est maintenu, par un saillant (18), dans une rainure (25) dans la paroi interne (7) de la douille de palier.

6. Dispositif selon revendication 1, caractérisé par le fait que le corps d'appui (9) prend appui contre un anneau d'appui séparé qui est maintenu dans une rainure dans la paroi interne (9) de la douille de palier.

7. Dispositif selon revendication 6, caractérisé par le fait que le corps d'appui (9) s'engage dans la rainure (25) par déformation au moins partielle.

8. Dispositif selon revendication 1, caractérisé par le fait que le corps d'appui (9) est en polyamide.

9. Dispositif selon revendication 1, caractérisé par le fait que, dans la région de la surface frontale (14) de l'ouverture de la douille de palier (4), le corps d'appui (9) est muni d'une ou plusieurs surfaces d'appui de montage (24) réparties périmétriquement, et par le fait que la lèvre d'étanchéité (15, 16), prévue pour l'étanchéité par rapport à la surface interne (7) de la douille de palier (4) ou à la surface externe (8) du tourillon, suit un tracé oblique par rapport à l'axe (x - x) du tourillon conjugué (5) et est tournée, par son extrémité libre, en direction de l'ouverture de la douille de palier (4).

Fig.1

9

Fig. 2

Fig.3

Fig.4

Fig.5

Fig.6